# EUROPEAN PATENT APPLICATION

(11) **EP 4 498 751 A1**
(43) Date of publication of application: **29.01.2025**
(21) Application number: 23810805.4
(22) Date of filing: 06.05.2023
(51) Int. Cl.: H04W 74/08

(54) **SIGNAL SENDING METHOD AND APPARATUS, AND SIGNAL RECEIVING METHOD AND APPARATUS**

(30) Priority: 27.05.2022 CN 202210591041
(71) Applicant: ZTE Corporation, Shenzhen, Guangdong 518057 (CN)
(72) Inventor: LU, Zhaohua, Shenzhen, Guangdong 518057 (CN); LIU, Kun, Shenzhen, Guangdong 518057 (CN); ZHENG, Guozeng, Shenzhen, Guangdong 518057 (CN); XIAO, Huahua, Shenzhen, Guangdong 518057 (CN)
(74) Representative: Deambrogi, Edgardo
(86) International application number: PCT/CN2023/092589
(87) International publication number: WO 2023/226732

(57) **Abstract**

Provided are a signal sending method and apparatus, a signal receiving method and apparatus, and a storage medium and an electronic apparatus. The signal sending method includes: determining a plurality of target beams; and sending a random access signal to a first node based on resources respectively corresponding to the plurality of target beams. By means of the present disclosure, the technical problem in the related art that a random access signal is able to be transmitted only on a resource corresponding to a single beam during a random access process is solved, thereby achieving the technical effect of transmitting the random access signal on resources respectively corresponding to a plurality of beams, and meeting communication requirements such as extremely low delay, extremely high reliability, an ultra-large bandwidth, mass access, etc.

## Description

### Cross-Reference to Related Application

This disclosure is based upon and claims priority to Chinese Patent Application No. CN202210591041.7 filed on May 27, 2022 and entitled "Signal Sending Method and Apparatus, and Signal Receiving Method and Apparatus", the disclosure of which is hereby incorporated by reference in its entirety.

### Technical Field

The present disclosure relates to the field of communications, and specifically to a signal sending method and apparatus, a signal receiving method and apparatus, and a storage medium and an electronic apparatus.

### Background

The large-scale commercialization of the 5th Generation Mobile Communication System (5G) New Radio (NR) is accelerating the transformation of the economic society into digitalization, networking and intelligence, and driving the network into a new era of Internet of Everything. The rapid emergence of application needs in terms of smart cities, intelligent transportation, intelligent industrial production, and the like leads to the continuous increasing of the development trend of network equipment capacity differentiation, network function diversification, and intelligent network management and control, thereby further promoting the arrival of the 6th Generation Mobile Communication System (6G). A large number of intelligent automation devices with highly differentiated capabilities exist in typical 6G application scenarios represented by smart cities, intelligent transportation, and smart homes, and have increasingly stringent communication requirements in terms of extremely low delay, extremely high reliability, an ultra-large bandwidth, mass access, etc. Applications of intelligent automation types also propose requirements of high accuracy and high resolution on sensing capabilities. On the one hand, the proliferation of wireless communication and sensing devices causes the contradiction between the endless increasing of service requirements and limited wireless resources and computing power to be more and more prominent; and on the other hand, the realization of the 6G vision requires the acquisition of environment-aware information, information interaction and sharing, intelligent information processing, and closed-loop information flow processing that is distributed by control information (including control information for communication networks and control instructions for application execution devices) layer by layer.

In the related art, in the 5G New Radio, in a random access process, a terminal can only send a random access signal (preamble) by selecting a Physical Random Access Channel (PRACH) resource corresponding to a beam direction, and then start the random access process. However, this may limit the performance of a UE, when the PRACH resource is limited or there are excessive UEs selecting the same beam direction, collision occurs in preamble sequences in the same beam direction, thus causing the UE to be unable to successfully access a system or causing the access delay of the UE to increase. Therefore, the random access method is unable to meet the emerging application requirements in the post-5G/6G era, for example, communication requirements in terms of extremely low delay, extremely high reliability, an ultra-large bandwidth, mass access, etc.

It may be seen that, in the related art, the terminal can only send the random access signal by selecting the PRACH resource corresponding to the beam direction, which limits the performance of the UE, and causes the UE to be unable to successfully access the system or causes the access delay of the UE to increase, thus the communication requirements in terms of extremely low delay, extremely high reliability, an ultra-large bandwidth, mass access, etc. cannot be met. No effective solutions have been proposed to solve the above problems in related art.

### Summary

Embodiments of the present disclosure provide a signal sending method and apparatus, a signal receiving method and apparatus, and a storage medium and an electronic apparatus, to at least solve the technical problem in the related art that a random access signal is able to be transmitted only on a resource corresponding to a single beam during a random access process.

One embodiment of the present disclosure provides a signal sending method, including: determining a plurality of target beams; and sending a random access signal to a first node based on resources respectively corresponding to the plurality of target beams.

One embodiment of the present disclosure provides a signal receiving method, including: receiving a random access signal sent by a second node on resources respectively corresponding to a plurality of target beams. The plurality of target beams are beams that are determined by the second node.

Another embodiment of the present disclosure provides a signal sending apparatus, including: a first determination module, configured to determine a plurality of target beams; and a first sending module, configured to send a random access signal to a first node based on resources respectively corresponding to the plurality of target beams.

One embodiment of the present disclosure provides a signal receiving apparatus, including: a third receiving module, configured to receive a random access signal sent by a second node on resources respectively corresponding to a plurality of target beams. The plurality of target beams are beams that are determined by the second node.

Still another embodiment of the present disclosure further provides a computer-readable storage medium. The computer-readable storage medium stores a computer program. Steps in any one of the above method embodiments are executed when the computer program is configured to operate.

Still another embodiment of the present disclosure further provides an electronic apparatus. The electronic apparatus includes a memory and a processor. The memory stores a computer program. The processor is configured to operate the computer program to execute steps in any one of the above method embodiments.

### Brief Description of the Drawings

Fig. 1 is a block diagram of a hardware structure of a mobile terminal of a signal sending method according to embodiments of the present disclosure.
Fig. 2 is a flowchart of a signal sending method according to embodiments of the present disclosure.
Fig. 3 is a flowchart of a signal receiving method according to embodiments of the present disclosure.
Fig. 4 is a schematic diagram of different beam directions between a base station and a terminal according to embodiments of the present disclosure.
Fig. 5 is a structural block diagram of a signal sending apparatus according to embodiments of the present disclosure.
Fig. 6 is a structural block diagram of a signal receiving apparatus according to embodiments of the present disclosure.

### Detailed Description of the Embodiments

The embodiments of the present disclosure are described below in detail with reference to the drawings and the embodiments.

It is to be noted that terms "first", "second" and the like in the description, claims and the above mentioned drawings of the present disclosure are used for distinguishing similar objects rather than describing a specific sequence or a precedence order.

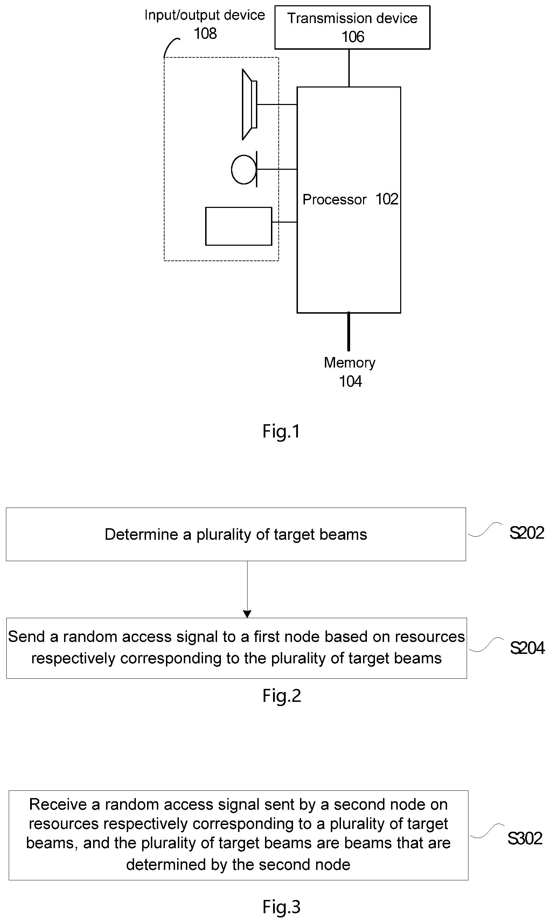

The method embodiments provided in the embodiments of the present disclosure may be executed in a mobile terminal, a computer terminal or a similar computing apparatus. By being operated on the mobile terminal as an example, Fig. 1 is a block diagram of a hardware structure of a mobile terminal of a signal sending method according to embodiments of the present disclosure. As shown in Fig. 1, the mobile terminal may include one or more (only one is shown in Fig. 1) processors 102 (the processor 102 may include, but is not limited to, a processing apparatus such as a microprocessor MCU or a programmable logic device FPGA) and a memory 104 for storing data. The above mobile terminal may further include a transmission device 106 for achieving a communication function and an input/output device 108. Those skilled in the art may understand that the structure shown in Fig. 1 is only a schematic diagram, which does not limit the structure of the above mobile terminal. For example, the mobile terminal may also include more or less components than those shown in Fig. 1, or have a different configuration from that shown in Fig. 1.

The memory 104 may be configured to store a computer program, for example, a software program and a module of application software, such as a computer program corresponding to a signal sending method in the embodiments of the present disclosure. The processor 102 runs the computer program stored in the memory 104, so as to execute various functional applications and data processing, that is, to realize the above method. The memory 104 may include a high-speed random access memory, and may further include a non-volatile memory, such as one or more magnetic disk memory apparatuses, a flash memory device, or other non-volatile solid-state memory devices. In some embodiments, the memory 104 may further include memories remotely disposed relative to the processor 102. The remote memories may be connected to the mobile terminal by using a network. Examples of the above network include, but are not limited to, the Internet, an intranet, a local area network, a mobile communication network, and a combination thereof.

The transmission apparatus 106 is configured to receive or transmit data via a network. The specific example of the above network may include a wireless network provided by a communication provider of the mobile terminal. In an example, the transmission apparatus 106 includes a Network Interface Controller (NIC), and may be connected to other network devices by using a base station, so as to communicate with the Internet. In an example, the transmission apparatus 106 is a Radio Frequency (RF) module, which is configured to communicate with the Internet in a wireless manner.

This embodiment provides a signal sending method. Fig. 2 is a flowchart of a signal sending method according to embodiments of the present disclosure. As shown in Fig. 2, the flow includes the following steps.

At S202, a plurality of target beams are determined.

At S204, a random access signal is sent to a first node based on resources respectively corresponding to the plurality of target beams.

An execution subject of the above steps may be a device having signal receiving and sending capabilities, such as a User Equipment (UE), and a processor or processing module in the UE, or may also be other processing devices or processing units having similar processing capabilities. The first node may be a base station, a specific module in the base station, or other network nodes that may communicate with the base station, and the like. The random access signal may also be referred to as a message 1, that is, Msg1.

The following is described with an example (only an exemplary description, in practice, there may be other devices or modules to execute the above operations) that the User Equipment (UE) executes the above operations. The related technology that is involved in the embodiments of the present disclosure is first described.

In the embodiments of the present disclosure, a beam may be represented by a determined resource set. The resource set may include at least one of the following: a sending end pre-code, a receiving end pre-code, an antenna port configuration of a sending end, an antenna weight vector of the sending end, an antenna weight matrix of the sending end, an antenna port configuration of a receiving end, an antenna weight vector of the receiving end, an antenna weight matrix of the receiving end, or determined time domain resources and/or frequency domain resources and/or code sub-resources. Therefore, a beam index may be replaced with a resource index. The beam may also be a transmission (sending/receiving) mode, and the transmission mode may include space division multiplexing, frequency domain and/or time domain diversity, etc.

In an optional embodiment, the beam includes at least one of the following: a sending beam, a receiving beam, a pre-code, a pre-coding matrix, a pre-coding matrix index, a receiving beam and sending beam pair, or a sending beam and receiving beam pair.

In an optional embodiment, a sending mode of a second channel/signal/resource refers to or uses a sending beam used by a first channel/signal/resource, which is called that the second channel and the first channel use the same sending beam. The sending beam of the first channel/signal/resource is represented by the determined resource set.

In an optional embodiment, a receiving mode of the second channel/signal/resource refers to or uses a receiving beam used by the first channel/signal/resource, which is called that the second channel and the first channel use the same receiving beam. The receiving beam of the first channel/signal/resource is represented by the determined resource set.

In an optional embodiment, one target beam corresponding to one beam direction, and the plurality of target beams may correspond to the same beam direction or different beam directions.

In the above embodiments, the plurality of target beams may be determined, and the random access signal may be sent to the first node based on the resources respectively corresponding to the plurality of target beams. In this way, the random access signal may be sent to the first node by using the resources that may send the random access signal and respectively correspond to the plurality of target beams, such that the situation that the random access signal is unable to be sent to the first node when there is a fault in a resource corresponding to a single beam is avoided, the technical problem in the related art that a random access signal is able to be transmitted only on a resource corresponding to a single beam during a random access process is solved, thereby achieving the technical effect of transmitting the random access signal on resources respectively corresponding to a plurality of beams, and meeting communication requirements such as extremely low delay, extremely high reliability, an ultra-large bandwidth, mass access, etc.

In an exemplary embodiment, determining the plurality of target beams comprises at least one of the following: detecting a downlink channel, and selecting the plurality of target beams based on detection results; measuring a downlink signal, and selecting the plurality of target beams based on measurement results; selecting the plurality of target beams from stored beams; acquiring the plurality of target beams from a plurality of beams configured by the first node; or selecting a target resource group from a plurality of resource groups configured, and selecting the plurality of target beams from a plurality of beams corresponding to the target resource group. In this embodiment, the target resource group may include a PRACH time domain resource and/or a preamble resource on a PRACH. When the plurality of target beams are selected from a plurality of beams corresponding to the target resource group, there are more beams corresponding to the target resource group, so as to select the plurality of target beams therefrom. The beams corresponding to the target resource group may be pre-configured. In addition, when the plurality of target beams are determined, the target beams corresponding to one or more downlink beams may be selected based on the detection results or measurement results by detecting or measuring the downlink channel. For example, when 4 downlink beams are selected based on the detection results or measurement results, the UE may select uplink beams corresponding to 2 downlink beams from the 4 downlink beams as the target beams according to a correspondence relationship between the uplink beam and the downlink beam (the correspondence relationship may be pre-defined, or informed through signaling, or negotiated by the UE and a base station side, etc.). In addition, it is to be further noted that, when the target beams are determined by means of acquiring the plurality of target beams from the plurality of beams configured by the first node, the first node may be pre-configured with more beams, and then the plurality of target beams are selected from more beams by the UE.

In an exemplary embodiment, sending the random access signal to the first node based on the resources respectively corresponding to the plurality of target beams includes: determining a transmission power for sending the random access signal on the target beam; determining a first beam from the plurality of target beams based on the transmission power, wherein there is one or more first beams, and the number of the first beams is less than or equal to the number of the target beams; and sending the random access signal on a resource corresponding to the first beam. In this embodiment, the first beam needs to be determined based on the transmission power. In addition, it is to be further noted that, the first beam may also be one or more beams selected from the target beams according to a specific selection mode (for example, pre-configured priorities for the beams, frequencies at which the beams are used, etc.). Definitely, one or more beams may also be randomly selected from the target beams, and the number of the first beams may also be adjusted based on actual situations. It is to be noted that, the selection mode of the first beam is only an exemplary embodiment, and the first beam is not limited to the above selection mode.

In an exemplary embodiment, determining the first beam from the plurality of target beams based on the transmission power includes: determining the corresponding target beam of which the transmission power is less than or equal to a first threshold as the first beam. In this embodiment, the first threshold may be a preset value, which may be set to a maximum transmission power supported by the first node or the maximum transmission power configured for the first node. The corresponding target beams of which the transmission power is less than or equal to the first threshold may all be determined as the first beams, or part of the target beams of which the transmission power is less than or equal to the first threshold are determined as the first beam. It is to be further noted that, the setting of the first threshold may be flexibly adjusted according to actual application situations.

In an exemplary embodiment, after sending the random access signal to the first node based on the resources respectively corresponding to the plurality of target beams, the method further includes: acquiring a first response message sent by the first node; and sending an uplink message to the first node based on an uplink channel resource configured by uplink channel configuration information in the first response message. The uplink message includes at least one of the following information: first indication information; or identification information of a second node sending the uplink message. The first indication information is configured to indicate whether to use a first effective beam, the first effective beam is a target beam for a random access signal corresponding to the first response message, and a beam corresponding to the first response message is a second effective beam. In this embodiment, the first response message (or referred to as a second message, that is, Msg2) is returned by the first node based on the received random access signal sent by the second node, that is, the first response message is a response message of the random access signal. In addition, there is a correspondence relationship between the first effective beam and the second effective beam. For example, one first effective beam may correspond to one second effective beam, and the uplink message may also be referred to as a third message, that is, Msg3.

In an exemplary embodiment, after sending the uplink message to the first node, the method further includes: the first node terminating sending of a second response message to the second node on a resource corresponding to the second effective beam when determining that the second node no longer uses the first effective beam based on the first indication information in the received uplink message; and the first node sending the second response message to the second node on the resource corresponding to the second effective beam when determining that the second node uses the first effective beam based on the first indication information in the received uplink message. The second response message is a response message of the uplink message. In this embodiment, if the first node determines that the received uplink message does not include the first indication information, the first node sends the second response message to the second node on the resource corresponding to the second effective beam.

In an exemplary embodiment, after sending the uplink message to the first node, the method further includes: the first node receiving the uplink message; and when the first indication information included in at least one uplink message received by the first node within a time window indicates that the first effective beam is no longer used, the first node selecting at least one first effective beam among the first effective beams no longer in use and indicated by the second node, and continuously sending the second response message to the second node on a resource corresponding to the second effective beam corresponding to the at least one first effective beam selected. The second response message is a response message of the uplink message. In this embodiment, in the random access process, the uplink message is scheduled by an information packet of the first response message. However, the information packet of the first response message only has index information of the random access signal, and the random access signal is common to terminals using the same beam, such that it cannot be ensured that only one terminal uses one beam to send the uplink message, that is to say, there may also be a plurality of terminals using the same beam to send the uplink message. In order to avoid the collision of the uplink messages due to the use of the same beam by the plurality of terminals, causing a base station not to detect the uplink message of the beam but instead detecting an uplink message of a beam discarded by the terminal, and in order to guarantee a random access flow, the base station may modify the decision of the terminal, that is, the first node continues to select at least one first effective beam among the first effective beams no longer in use and indicated by the second node, so as to complete the random access flow. In addition, there may also be the plurality of terminals using the same beam to send the uplink message, resulting in increased delay in sending the uplink message. In order to avoid increased delay in sending the uplink message due to the use of the same beam by the plurality of terminals, causing the base station not to detect the uplink message of the beam but instead detecting the uplink message of the beam discarded by the terminal, and in order to guarantee the random access flow, the base station may modify the decision of the terminal, that is, at least one first effective beam is continuously selected among the first effective beams no longer in use and indicated by the second node, so as to complete the random access flow.

In an exemplary embodiment, after sending the uplink message to the first node, the method further includes at least one of the following: confirming the abandonment of the use of the first effective beam when indicating that a target downlink channel sent to the second node by the first node is not received on the resource corresponding to the second effective beam corresponding to the first effective beam not in use; confirming not to continue detecting the target downlink channel on the resource corresponding to the second effective beam corresponding to the first effective beam when indicating that the target downlink channel sent to the second node by the first node is received on the resource corresponding to the second effective beam corresponding to the first effective beam not in use and control information in the target downlink channel includes confirmation information not using the first effective beam; continuously detecting the second response message according to scheduling information of the second response message in the target downlink channel when indicating that the target downlink channel sent by the first node is received on the resource corresponding to the second effective beam corresponding to the first effective beam not in use and the control information in the target downlink channel includes information using the first effective beam; or continuously detecting the second response message according to the scheduling information when indicating that the target downlink channel sent by the first node is received on the resource corresponding to the second effective beam corresponding to the first effective beam not in use, the control information in the target downlink channel includes the scheduling information of the second response message, and the scheduling information is in a valid state. In this embodiment, when the terminal indicates that the target downlink channel sent by the base station is not received on the resource corresponding to the second effective beam corresponding to the first effective beam not in use, the terminal abandons the use of the first effective beam based on the situation; when the terminal indicates that the target downlink channel sent by the base station is received on the resource corresponding to the second effective beam corresponding to the first effective beam not in use and the control information in the target downlink channel includes the confirmation information not using the first effective beam, the terminal confirms not to continuously detect the target downlink channel on the resource corresponding to the second effective beam corresponding to the first effective beam based on the situation; when the terminal indicates that the target downlink channel sent by the base station is received on the resource corresponding to the second effective beam corresponding to the first effective beam not in use, the terminal continues to detect the second response message according to the scheduling information of the second response message in the target downlink channel; and the terminal indicates that the target downlink channel sent by the base station is received on the resource corresponding to the second effective beam corresponding to the first effective beam, the control information in the target downlink channel includes the scheduling information of the second response message, and the scheduling information is in the valid state, the terminal continues to detect the second response message according to the scheduling information based on the situation.

In an exemplary embodiment, sending the uplink message to the first node based on the uplink channel resource configured by the uplink channel configuration information in the first response message includes: selecting one or more first response messages from the acquired first response messages; and sending the uplink message to the first node through the uplink channel resource configured by the uplink channel configuration information in the selected first response message. In this embodiment, the information packet of the first response message is not necessarily carried in one first response message, and may be distributed in the plurality of first response messages, such that the uplink message may be sent to the base station by selecting the uplink channel resource configured by the uplink channel configuration information of one or more first response messages from the acquired first response messages. Optionally, sending the uplink message may also be implemented through the following manners: selecting a predetermined number of the first beams from the beams receiving the random access signal; and sending the uplink message to the first node through the resource corresponding to the first beam, that is, the UE may select to send Msg3 (i.e., the uplink message) corresponding to a part of the beams.

In an exemplary embodiment, sending the uplink message to the first node includes: determining the uplink message that does not need to be sent on a resource corresponding to the first effective beam when at least one of the following rules is met: sending the uplink message with a transmission power exceeding a second threshold on the resource corresponding to the first effective beam; the size of the configured resource of the uplink message not meeting a first requirement; the channel quality performance of the received first response message not meeting a second requirement; or sending uplink messages other than the uplink message that does not need to be sent to the first node. In this embodiment, the second threshold may be a preset value, which may be set to the maximum transmission power supported by the first node or the maximum transmission power configured for the first node. When the uplink message of which transmission power exceeds the second threshold is sent on the resource corresponding to the first effective beam, the uplink message that does not need to be sent on the resource corresponding to the first effective beam may be determined. In addition, the first requirement may be a bandwidth, a data access volume, etc., and the second requirement may be delay, reliability, efficiency, etc. It is to be noted that, the above example description of the second threshold, first requirement, and second requirement is only an exemplary embodiment, and the second threshold, first requirement, and second requirement are not limited to the above example.

In an exemplary embodiment, after sending the uplink message to the first node, the method further includes: receiving a target downlink channel sent by the first node, and determining whether to continuously use the first effective beam based on the target downlink channel. The second response message is no longer detected when the target downlink channel indicates that the first effective beam is no longer used; the second response message is continuously detected when the target downlink channel indicates that the first effective beam needs to be continuously used; and the second response message is a response message of the uplink message. In this embodiment, instead of directly instructing the second node to no longer use the first effective beam through the target downlink channel, by acquiring the indication information included in resource allocation information of the second response message, it is determined that the first node instructs the second node to continuously use the first effective beam when the second node is instructed to determine the resource allocation information of the second response message to be in a valid state by decoding the control information included in the target downlink channel.

In an exemplary embodiment, acquiring the first response message returned by the first node based on the received random access signal includes: detecting a target downlink channel sent by the first node within a target time window after sending the random access signal, where target control information of the target downlink channel carries scheduling information of the first response message; and detecting and receiving the first response message based on the scheduling information of the first response message. After acquiring the first response message returned by the first node based on the received random access signal, the method further includes: terminating continuous detection of the target downlink channel within the target time window. In this embodiment, the information packet of the first response message may be carried in the plurality of first response messages within the time window, such that the information packet of the first response message includes at least index information of one random access signal. The index information is the random access signal that is configured to indicate that the information packet responds to the index information.

This embodiment further provides a signal receiving method. Fig. 3 is a flowchart of a signal receiving method according to embodiments of the present disclosure. As shown in Fig. 3, the flow includes the following step.

At S302, a random access signal sent by a second node on resources respectively corresponding to a plurality of target beams is received, and the plurality of target beams are beams that are determined by the second node.

An execution subject of the above steps may be the foregoing first node. The first node may be a device having signal receiving and sending capabilities, such as a base station, or a module in the base station, or may also be a network node that may perform data transmission with the base station, or may also be other processing devices or processing units having similar processing capabilities. The following is described with an example (only an exemplary description, in practice, there may be other devices or modules to execute the above operations) that the base station executes the above operations. The second node may be the foregoing UE.

In the above embodiments, the second node may determine the plurality of target beams, and the random access signal may be sent to the first node based on the resources respectively corresponding to the plurality of target beams. In this way, the random access signal may be sent to the first node by using the resources that may send the random access signal and respectively correspond to the plurality of target beams, such that the situation that the random access signal is unable to be sent to the first node when there is a fault in a resource corresponding to a single beam is avoided, the technical problem in the related art that a random access signal is able to be transmitted only on a resource corresponding to a single beam during a random access process is solved, thereby achieving the technical effect of transmitting the random access signal on resources respectively corresponding to a plurality of beams, and meeting communication requirements such as extremely low delay, extremely high reliability, an ultra-large bandwidth, mass access, etc.

In the above embodiments, the plurality of target beams may be optimal beams determined by the second node from the plurality of beams, or may also be beams randomly determined by the second node from the plurality of beams.

In an exemplary embodiment, the plurality of target beams are determined by the second node through at least one of the following manners: measuring a downlink signal, and selecting the plurality of target beams based on measurement results; selecting the plurality of target beams from stored beams; acquiring the plurality of target beams from a plurality of beams configured by the first node; or selecting a target resource group from a plurality of resource groups configured, and selecting the plurality of target beams from a plurality of beams corresponding to the target resource group.

In an exemplary embodiment, receiving the random access signal sent by the second node on resources respectively corresponding to the plurality of target beams includes: receiving the random access signal sent by the second node on a resource corresponding to a first beam. The first beam is determined by the second node through the following manners: determining a transmission power for sending the random access signal on the target beam; and determining the first beam from the plurality of target beams based on the transmission power, where there is one or more first beams, and the number of the first beams is less than or equal to the number of the target beams.

In an exemplary embodiment, the second node determines the first beam from the plurality of target beams based on the transmission power by the following manner: determining the corresponding target beam of which the transmission power is less than or equal to a first threshold as the first beam.

In an exemplary embodiment, after receiving the random access signal sent by the second node on resources respectively corresponding to the plurality of target beams, the method further includes: returning a first response message to the second node based on the received random access signal. The first response message is configured to instruct the second node to return an uplink message based on an uplink channel resource configured by uplink channel configuration information in the first response message, and the uplink message includes at least one of the following information: first indication information; identification information of a second node sending the uplink message. The first indication information is configured to indicate whether to use a first effective beam, the first effective beam is a target beam for a random access signal corresponding to the first response message, and a beam corresponding to the first response message is a second effective beam.

In an exemplary embodiment, sending of a second response message to the second node on a resource corresponding to the second effective beam is terminated when it is determined that the second node no longer uses the first effective beam based on the first indication information in the received uplink message; and the second response message is sent to the second node on the resource corresponding to the second effective beam when it is determined that the second node uses the first effective beam based on the first indication information in the received uplink message. The second response message is a response message of the uplink message.

In an exemplary embodiment, the uplink message is received; and when the first indication information included in at least one uplink message received within a time window indicates that the first effective beam is no longer used, at least one first effective beam is selected among the first effective beams no longer in use and indicated by the second node, and the second response message is continuously sent to the second node on a resource corresponding to the second effective beam corresponding to the at least one first effective beam selected. The second response message is a response message of the uplink message.

In an exemplary embodiment, the uplink message sent by the second node through the uplink channel resource configured by the uplink channel configuration information in one or more first response messages selected is received. The one or more first response messages selected are selected by the second node from the acquired first response messages. In this embodiment, an information packet of the first response message may be carried by the plurality of first response messages, such that the base station may receive the uplink message sent by the terminal selecting the uplink channel resource configured by the uplink channel configuration information of one or more first response messages from the acquired first response messages.

In an exemplary embodiment, a target downlink channel is sent to the second node to indicate whether the second node continuously uses the first effective beam. When it indicates that the second node no longer uses the first effective beam, the second node does not continue to detect a second response message; when it indicates that the second node needs to continuously use the first effective beam, the second node continuously detects the second response message. The second response message is a response message of the uplink message.

It is apparent that the embodiments described above are only a part of the embodiments of the present disclosure, rather than all of the embodiments.

The present disclosure is specifically described below in reference with specific embodiments.

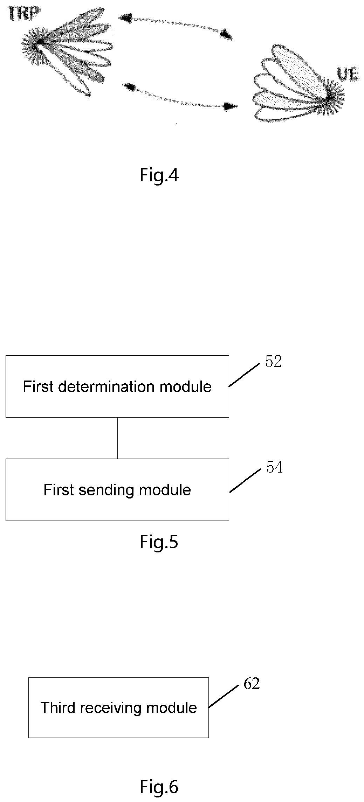

In a 5G NR system, the terminal receives Transmit-Receive Point (TRP, a new name for the base station by 5G) Synchronization Signal/Physical Broadcast Channel Block (SSB). Since the SSB may be sent by means of the plurality of beams, that is, SSB information may be sent out in different beam directions. Fig. 4 is a schematic diagram of different beam directions between a base station and a terminal according to embodiments of the present disclosure. Then, the terminal selects one Beam direction corresponding to the SSB according to the received SSB, further selects a PRACH resource corresponding to the Beam direction, and sends the random access signal (preamble) on the PRACH resource, so as to start a random access process. The SSB includes a Primary Synchronization Signal (PSS), a Secondary Synchronization Signal (SSS), and a Physical Broadcast Channel (PBCH).

Mapping of the SSB in the 5GNR system and a PRACH Occasion:
SSB: that is, a SS/PBCH block, in which carries a downlink synchronization signal (including the PSS and the SSS) and the PBCH (carrying Management Information Base (MIB) information). Since an NR supports the sending of a plurality of Beams, the SSB also supports the sending in a plurality of Beam directions.
PRACH Occasion (PRACH time-frequency resource, RO): a corresponding time-frequency resource during the sending of PRACH Preamble. At the same time, a frequency domain may include a plurality of PRACH Occasions.

The PRACH occasion in the random access process in the NR needs to form a correspondence relationship with the SSB, that is, 1 PRACH Occasion may correspond to 1 SSB, or may also correspond to a plurality of SSBs, which are configured by the base station.

### Solution I:

At S1, a UE sends the random access signal (preamble) on the PRACH time-frequency resource (i.e., the foregoing PRACH occasion) corresponding to the plurality of beams, which may be referred to as Msg1 (corresponding to the random access signal) message sending.

The beams direction selected by the UE may be obtained by using at least one of the following manners.

Manner 1: the UE measures/detects a Downlink signal/channel (the Downlink signal/channel may be sent in different beams directions), so as to determine the plurality of beams directions selected by the UE. The UE performs comparison with a threshold value according to results for measuring/detecting the Downlink signal/channel, and determines the number of beams directions selected by the UE according to the following manners, including: when the number of beams meeting a threshold value requirement is greater than or equal to N, selecting N beams directions therein (the N beams directions may be the optimal N of Reference Signal Receiving Power (RSRP)/Reference Signal Receiving Quality (RSRQ, LTE RSRQ)/Reference Signal Strength Indicator (RSSI)/Signal-to-Noise-Ratio (SNR, a quality control method), or may also be any N); otherwise, all beams meeting the threshold value requirement are used as the beams directions selected. Meeting the threshold value requirement includes information of RSRP/RSRQ/RSSI/SNR for measuring/detecting the Downlink signal/channel being greater than or equal to the threshold value.

Manner 2: the UE automatically selects N beams directions. The N beams directions may be N beams directions stored by the UE, or may also be N beams directions that are used when the UE previously accesses to a system.

Manner 3: the TPR configures the N beams directions for the UE through DL information.

Manner 4: during the configuration of the PRACH resource, the PRACH resource (including the PRACH time-frequency resource and/or a preamble resource on the PRACH) is grouped, and each group of the PRACH resources may support Msg1 sending of the plurality of beams directions. The UE selects one group of PRACH resources, and the UE sends the Msg1 on M beams corresponding to the group of PRACH resources.

At S1-1, after the UE determines the beams according to S1, if the transmission power of the UE that is required to transmit the Msg1 in the beam direction exceeds one threshold, the beam does not need to perform the transmission of the Msg1.

At S2, the TRP sends response information of the Msg1 to the UE, which may be referred to as Msg2 (corresponding to the first response message). Scheduling information of the Msg2 is carried in Downlink Control Information (DCI) in a Physical Downlink Control Channel (PDCCH). The Msg2 is sent by being carried in a Physical Downlink Shared Channel (PDSCH). The Msg2 includes one or more information packets, and the information packet includes at least index information of one preamble. The preamble index information is configured to indicate that the information packet is a response to the preamble of the index information.

At S3, after sending the Msg1, the UE detects, within one time window, the PDCCH in which the scheduling information of the Msg2 sent by the TRP is located, and then detects the Msg2 according to the scheduling information carried by the DCI in the detected PDCCH. It is assumed that the UE detects K (K is less than or equal to M) Msg2s of M beams sent by the TRP (the TRP may not always detect the preambles of the M beams, such that K is used here to represent the Msg2), for example, the index information of K preambles in the information packets of the K Msg2s (the information packets of the K Msg2s are not necessarily carried in one Msg2, and may also be distributed in the plurality of Msg2s within the time window) is sent by the UE. Further, the information packets of the K Msg2s further include resource allocation information of a Physical Uplink Shared Channel (PUSCH), which is used for the UE to transmit the uplink message, and the uplink message may be referred to as Msg3.

At S4, the UE sends K1 Msg3s according to the PUSCH indicated by the information packets of the K Msg2s. The Msg3 includes at least one of the following information:
(1) First indication information, configured to indicate that the UE continues to use the beams direction.
(2) Identification information for the UE.

K1 is less than or equal to K. When the UE sends the Msg3, if the transmission power exceeds the threshold, the Msg3 is not sent, and the corresponding beam direction is also abandoned by the UE.

At S5, the TRP receives the Msg3 sent by the UE, and then executes the following operations.

When the Msg3 indicates that the UE does not use the beams direction, the TRP does not continue to send a response message, i.e., Msg4 (corresponding to the second response message), of the Msg3 to the UE in the beams direction. The Msg4 is carried by the PDSCH scheduled by the PDCCH.

When the Msg3 indicates that the UE continues the beams direction or there is no first indication information in the Msg3, the TRP continues to send the response message (i.e., Msg4) of the Msg3 to the UE.

### Solution II:

This solution is an extension of S5 of solution 1.

The extension of S5 is as follows.

At S5, the TRP receives the Msg3 sent by the UE, and then executes the following operations.

The TRP sends the PDCCH to the UE, and indicates, in the DCI therein, whether to abandon the beam direction. If the DCI instructs the UE to abandon the beam direction, the UE no longer detects the follow-up Msg4 information. If the DCI instructs the UE to continue using the beam direction, the UE continues to detect the follow-up Msg4 information. It is to be noted that, if the DCI does not instruct the UE to continue using the beam direction, indication information included in the resource allocation information of the Msg4 is acquired, that is, instructs the UE to decode the DCI to determine that the resource allocation information of the Msg4 is a valid value, and it is determined that the TRP instructs the UE to continue using the beam direction.

### Solution III:

This solution is an extension of S5 of solution 1.

The extension of S5 is as follows.

At S5, the TRP receives the Msg3 sent by the UE, and then executes the following operations. When the TRP only detects the Msg3 sent by the UE in the beams direction that the UE is instructed to not use, the TRP continues to send the Msg4 in the Beams direction, that is, in the random access process, although the Msg3 is scheduled by the information packet of the Msg2, the information packet of the Msg2 only has the preamble index information, and the preamble is common to the UE that may using the same beams, such that there may be a plurality of UEs using the same beams to send the Msg3, causing the Msg3s of the plurality of UEs to collide and causing the TRP to detect the Msg3 on the beams abandoned by the UE instead of detecting the Msg3 on the beams. In order to guarantee the random access flow, the TRP may modify the decision of the UE, that is, continuing using the beams direction to complete the random access flow.

At S6, the UE continues to detect the PDCCHs of the response messages Msg4 of the K Msg3s, and executes at least one of the following operations.

If the UE does not receive the PDCCH in the beams direction that the UE is instructed to not use, it is confirmed that the beams direction is abandoned.

If the UE receives the PDCCH in the beams direction that the UE is instructed to not use, and the DCI in the PDCCH includes confirmation information for confirming to not use the beams direction, the UE does not continue to detect the PDCCH in the beams direction.

If the UE receives the PDCCH in the beams direction that the UE is instructed to not use, and the DCI in the PDCCH includes information continuously using the beams, the UE continues to detect the Msg4 according to the PDSCH scheduling information in the PDCCH.

If the UE receives the PDCCH in the beams direction that the UE is instructed to not use, the DCI in the PDCCH includes the PDSCH scheduling information, and the PDSCH scheduling information is a valid value, the UE continues to detect the Msg4 according to the PDSCH scheduling information in the PDCCH.

### Solution IV:

This solution is an extension of S4-5 in solution 1.

At S3 (consistent with Solution 1), after sending the Msg1, the UE detects, within one time window, the PDCCH in which the scheduling information of the Msg2 sent by the TRP is located, and then detects the Msg2 according to the scheduling information carried by the DCI in the detected PDCCH. It is assumed that the UE detects K (K is less than or equal to M) Msg2s of M beams sent by the TRP (the TRP may not always detect the preambles of the M beams, such that K is used here to represent the Msg2), for example, the index information of K preambles in the information packets of the K Msg2s (the information packets of the K Msg2s are not necessarily carried in one Msg2, and may also be distributed in the plurality of Msg2s within the time window) is sent by the UE. Further, the information packets of the K Msg2s further include the resource allocation information of the PUSCH, which is used for the UE to transmit the uplink message, and the uplink message may be referred to as the Msg3.

The extension of S4 is as follows.

At S4, the UE receives the information packet of the Msg2 in K beams directions, and the UE selects K1 beams directions among the K beams directions to send the Msg3. The scheduling information of the Msg3 is indicated in the information packet of the Msg2. The Msg3 in the beam direction is not sent when at least one of the following conditions is met.
(1) In one beam direction, when the UE sends the Msg3, if the transmission power exceeds the threshold, the Msg3 is not sent.
(2) When the size of the Msg3 resource configured in the information packet of the Msg3 does not meet a UE requirement, the Msg3 is not sent.
(3) For the Msg1 of a certain beam, the channel quality performance of the Msg2 received by the UE does not meet the requirement, and the Msg3 corresponding to the Msg2 is not sent.

The extension of S5 is specifically as follows.

At S5, the TRP receives the Msg3 sent by the UE, and then executes the following operations.

The TRP sends the PDCCH to the UE, and indicates, in the DCI therein, whether to abandon the beam direction. If the DCI instructs the UE to abandon the beam direction, the UE no longer detects the follow-up Msg4 information. If the DCI instructs the UE to continue using the beam direction, the UE continues to detect the follow-up Msg4 information. If the DCI does not instruct the UE to continue using the beam direction, indication information included in the resource allocation information of the Msg4 is acquired, that is, instructs the UE to decode the DCI to determine that the resource allocation information of the Msg4 is a valid value, and it is determined that the TRP instructs the UE to continue using the beam direction.

### Solution V:

This solution is an extension of S3 in solution 1.

At S2 (same as S1-2 in Solution 1), the TRP sends the response information, which is referred to as the Msg2, of the Msg1 to the UE. The scheduling information of the Msg2 is carried in the DCI of the PDCCH. The Msg2 is sent by being carried in the PDSCH. The Msg2 includes one or more information packets, and each information packet includes at least index information of one preamble. The preamble index information is configured to indicate that the information packet is a response to the preamble of the index information. Further, during the configuration of the PRACH resource, the PRACH resource (including the PRACH time-frequency resource and/or a preamble resource on the PRACH) is grouped, and each group of the PRACH resources may support Msg1 sending of the plurality of beams directions. The UE selects one group of PRACH resources, and the UE sends the Msg1 on M beams corresponding to the group of PRACH resources.

The extension of S3 is as follows.

At S3, after sending the Msg1, the UE detects the PDCCH sent by the TRP within one time window, where the DCI of the PDCCH carries the scheduling information of the response information Msg2 of the Msg1. Within the time window, the UE continues to send the Msg3 according to a Msg3 resource indicated in the Msg2 when detecting the PDCCH and detecting the preamble index sent by itself from the Msg2 carried in the corresponding PDSCH. Further, the UE does not continue to detect the PDCCH within the time window.

From the above descriptions about the implementation modes, those skilled in the art may clearly know that the method according to the foregoing embodiments may be implemented in a manner of combining software and a necessary universal hardware platform, and of course, may also be implemented through hardware, but the former is a preferred implementation mode under many circumstances. Based on such an understanding, the technical solutions of the present disclosure substantially or parts making contributions to the conventional art may be embodied in form of software product, and the computer software product is stored in a storage medium (for example, a ROM/RAM), a magnetic disk and an optical disk), including a plurality of instructions configured to enable a UE (which may be a mobile phone, a computer, a server, a network device, or the like) to execute the method in each embodiment of the present disclosure.

This embodiment further provides a signal sending apparatus. The apparatus is configured to implement the foregoing embodiments, and what has been described will not be described again. As used below, the term "module" may be a combination of software and/or hardware that implements a predetermined function. Although the apparatus described in the following embodiments is implemented in software, but implementations in hardware, or a combination of software and hardware, are also possible and conceived.

Fig. 5 is a structural block diagram of a signal sending apparatus according to embodiments of the present disclosure. As shown in Fig. 5, the apparatus includes a first determination module and a first sending module.

The first determination module 52 is configured to determine a plurality of target beams.

The first sending module 54 is configured to send a random access signal to a first node based on resources respectively corresponding to the plurality of target beams.

In an optional embodiment, the first determination module 52 is configured to determine the plurality of target beams through at least one of the following manners.

A downlink channel is detected, and the plurality of target beams are selected based on detection results; a downlink signal is measured, and the plurality of target beams are selected based on measurement results; the plurality of target beams are selected from stored beams; the plurality of target beams are acquired from a plurality of beams configured by the first node; or a target resource group is selected from a plurality of resource groups configured, and the plurality of target beams are selected from a plurality of beams corresponding to the target resource group.

In an optional embodiment, the first sending module 54 includes a first determination unit, a second determination unit, and a first sending unit.

The first determination unit is configured to determine a transmission power for sending the random access signal on the target beam.

The second determination unit is configured to determine a first beam from the plurality of target beams based on the transmission power. There is one or more first beams, and the number of the first beams is less than or equal to the number of the target beams.

The first sending unit is configured to send the random access signal on a resource corresponding to the first beam.

In an optional embodiment, the second determination unit includes a determination sub-unit.

The determination sub-unit is configured to determine the corresponding target beam of which the transmission power is less than or equal to a first threshold as the first beam.

In an optional embodiment, the apparatus further includes an acquisition module and a second sending module.

The acquisition module is configured to send the random access signal to the first node based on the resources respectively corresponding to the plurality of target beams, and then acquire a first response message sent by the first node.

The second sending module is configured to send an uplink message to the first node based on an uplink channel resource configured by uplink channel configuration information in the first response message. The uplink message includes at least one of the following information: first indication information; identification information of a second node sending the uplink message. The first indication information is configured to indicate whether to use a first effective beam, the first effective beam is a target beam for a random access signal corresponding to the first response message, and a beam corresponding to the first response message is a second effective beam.

In an optional embodiment, the apparatus further includes a first termination module and a third sending module.

The first termination module is configured to send the uplink message to the first node, and then terminate sending of a second response message to the second node on a resource corresponding to the second effective beam when the first node determines that the second node no longer uses the first effective beam based on the first indication information in the received uplink message.

The third sending module is configured to send the second response message to the second node on the resource corresponding to the second effective beam when the first node determines that the second node uses the first effective beam based on the first indication information in the received uplink message. The second response message is a response message of the uplink message.

In an optional embodiment, the first node includes a first receiving module and a fourth sending module.

The first receiving module is configured to receive the uplink message.

The fourth sending module is configured to, when the first indication information included in at least one uplink message received within a time window indicates that the first effective beam is no longer used, select, by the first node, at least one first effective beam among the first effective beams no longer in use and indicated by the second node, and continuously send the second response message to the second node on a resource corresponding to the second effective beam corresponding to the at least one first effective beam selected. The second response message is a response message of the uplink message.

In an optional embodiment, the apparatus further includes at least one of the followings: a first confirmation module, a second confirmation module, a first detection module, or a second detection module.

The first confirmation module is configured to send the uplink message to the first node, and then confirm the abandonment of the use of the first effective beam when indicating that a target downlink channel sent to the second node by the first node is not received on the resource corresponding to the second effective beam corresponding to the first effective beam not in use.

The second confirmation module is configured to confirm not to continue detecting the target downlink channel on the resource corresponding to the second effective beam corresponding to the first effective beam when indicating that the target downlink channel sent to the second node by the first node is received on the resource corresponding to the second effective beam corresponding to the first effective beam not in use and control information in the target downlink channel comprises confirmation information not using the first effective beam.

The first detection module is configured to continuously detect the second response message according to scheduling information of the second response message in the target downlink channel when indicating that the target downlink channel sent by the first node is received on the resource corresponding to the second effective beam corresponding to the first effective beam not in use and the control information in the target downlink channel comprises information using the first effective beam.

The second detection module is configured to continuously detect the second response message according to the scheduling information when indicating that the target downlink channel sent by the first node is received on the resource corresponding to the second effective beam corresponding to the first effective beam not in use, the control information in the target downlink channel comprises the scheduling information of the second response message, and the scheduling information is in a valid state.

In an optional embodiment, the second sending module includes a selection unit and a second sending unit.

The selection unit is configured to select one or more first response messages from the acquired first response messages.

The second sending unit is configured to send the uplink message to the first node through the uplink channel resource configured by the uplink channel configuration information in the selected first response message.

In an optional embodiment, the second sending module includes a third determination unit and a third sending unit.

The third determination unit is configured to determine the uplink message that does not need to be sent on a resource corresponding to the first effective beam when at least one of the following rules is met: the uplink message with a transmission power exceeding a second threshold being sent on the resource corresponding to the first effective beam; the size of the configured resource of the uplink message not meeting a first requirement; the channel quality performance of the received first response message not meeting a second requirement. The third sending unit is configured to send uplink messages other than the uplink message that does not need to be sent to the first node.

In an optional embodiment, the apparatus further includes a second receiving module.

The second receiving module is configured to send the uplink message to the first node, then receive a target downlink channel sent by the first node, and determine whether to continuously use the first effective beam based on the target downlink channel. The second response message is no longer detected when the target downlink channel indicates that the first effective beam is no longer used; the second response message is continuously detected when the target downlink channel indicates that the first effective beam needs to be continuously used; and the second response message is a response message of the uplink message.

In an optional embodiment, the acquisition module includes a first detection unit and a second detection unit.

The first detection unit is configured to detect a target downlink channel sent by the first node within a target time window after sending the random access signal. Target control information of the target downlink channel carries scheduling information of the first response message.

The second detection unit is configured to detect and receive the first response message based on the scheduling information of the first response message.

The apparatus further includes a second termination module, configured to acquire the first response message returned by the first node based on the received random access signal, and then terminate continuous detection of the target downlink channel within the target time window.

Fig. 6 is a structural block diagram of a signal receiving apparatus according to embodiments of the present disclosure. As shown in Fig. 6, the apparatus includes a third receiving module.

The third receiving module 62 is configured to receive a random access signal sent by a second node on resources respectively corresponding to a plurality of target beams. The plurality of target beams are beams that are determined by the second node.

In an optional embodiment, the plurality of target beams are determined by the second node through at least one of the following manners: measuring a downlink signal, and selecting the plurality of target beams based on measurement results; selecting the plurality of target beams from stored beams; acquiring the plurality of target beams from a plurality of beams configured by the first node; or selecting a target resource group from a plurality of resource groups configured, and selecting the plurality of target beams from a plurality of beams corresponding to the target resource group.

In an optional embodiment, the third receiving module 62 includes a first determination unit, a second receiving unit.

The second receiving unit is configured to receive the random access signal sent by the second node on a resource corresponding to a first beam. The first beam is determined by the second node through the following manners: determining a transmission power for sending the random access signal on the target beam; and determining the first beam from the plurality of target beams based on the transmission power, where there is one or more first beams, and the number of the first beams is less than or equal to the number of the target beams.

In an optional embodiment, the second node determines the first beam from the plurality of target beams based on the transmission power by the following manner: determining the corresponding target beam of which the transmission power is less than or equal to a first threshold as the first beam.

In an optional embodiment, the apparatus further includes a returning module.

The returning module is configured to receive the random access signal sent by the second node on resources respectively corresponding to the plurality of target beams, and then return a first response message to the second node based on the received random access signal. The first response message is configured to instruct the second node to return an uplink message based on an uplink channel resource configured by uplink channel configuration information in the first response message, and the uplink message includes at least one of the following information: first indication information; identification information of a second node sending the uplink message. The first indication information is configured to indicate whether to use a first effective beam, the first effective beam is a target beam for a random access signal corresponding to the first response message, and a beam corresponding to the first response message is a second effective beam.

In an optional embodiment, the apparatus further includes a third termination module and a processing module.

The third termination module is configured to terminate sending of a second response message to the second node on a resource corresponding to the second effective beam when determining that the second node no longer uses the first effective beam based on the first indication information in the received uplink message.

The processing module is configured to send the second response message to the second node on the resource corresponding to the second effective beam when determining that the second node uses the first effective beam based on the first indication information in the received uplink message. The second response message is a response message of the uplink message.

In an optional embodiment, the apparatus further includes a fourth receiving module and a fifth sending module.

The fourth receiving module is configured to receive the uplink message.

The fifth sending module is configured to, when the first indication information included in at least one uplink message received within a time window indicates that the first effective beam is no longer used, select at least one first effective beam among the first effective beams no longer in use and indicated by the second node, and continuously send the second response message to the second node on a resource corresponding to the second effective beam corresponding to the at least one first effective beam selected. The second response message is a response message of the uplink message.

In an optional embodiment, the apparatus further includes a fifth receiving module.

The fifth receiving module is configured to receive the uplink message sent by the second node through the uplink channel resource configured by the uplink channel configuration information in one or more first response messages selected. The one or more first response messages selected are selected by the second node from the acquired first response messages.

In an optional embodiment, the apparatus further includes a sixth sending module.

The sixth sending module is configured to send a target downlink channel to the second node to indicate whether the second node continuously uses the first effective beam. When it indicates that the second node no longer uses the first effective beam, the second node does not continue to detect a second response message; when it indicates that the second node needs to continuously use the first effective beam, the second node continuously detects the second response message; and the second response message is a response message of the uplink message.

It is to be noted that, each of the above modules may be implemented by software or hardware. For the latter, it may be implemented in the following manners, but is not limited to the follow: the above modules are all located in a same processor; or the above modules are located in different processors in any combination.

An embodiment of the present disclosure further provides a computer-readable storage medium. The computer-readable storage medium stores a computer program. Steps in any one of the above method embodiments are executed when the computer program is configured to operate.

In an exemplary embodiment, the computer-readable storage medium may include, but is not limited to, a USB flash disk, a Read-Only Memory (ROM), a Random Access Memory (RAM), and various media that can store computer programs, such as a mobile hard disk, a magnetic disk, or an optical disk.

An embodiment of the present disclosure further provides an electronic apparatus. The electronic apparatus includes a memory and a processor. The memory is configured to store a computer program. The processor is configured to run the computer program to execute steps in any one of method embodiments described above.

In an exemplary embodiment, the electronic apparatus may further include a transmission device and an input/output device. The transmission device is connected to the processor. The input/output device is connected to the processor.

For specific examples in this embodiment, refer to the examples described in the foregoing embodiments and the exemplary implementations, and this embodiment will not be repeated thereto.

It is apparent that those skilled in the art should understand that the above mentioned modules or steps of the present disclosure may be implemented by a general computing device, and may also be gathered together on a single computing device or distributed in network composed of multiple computing devices. The above mentioned modules or steps of the present application may be implemented with program codes executable by the computing device, so that may be stored in a storage device for execution by the computing device, and in some cases, the steps shown or described may be performed in a different sequence than herein, or can be fabricated into individual integrated circuit modules respectively, or multiple modules or steps thereof are fabricated into a single integrated circuit module for implementation. In this way, the present disclosure is not limited to any specific combination of hardware and software.

The above are only the embodiments of the present disclosure and are not intended to limit the present disclosure. For those skilled in the art, the present disclosure may have various modifications and variations. Any modifications, equivalent replacements, improvements and the like made within the principle of the disclosure shall fall within the scope of protection of the present disclosure.

## Claims

1. A signal sending method, comprising:
determining a plurality of target beams; and
sending a random access signal to a first node based on resources respectively corresponding to the plurality of target beams.

2. The method according to claim 1, wherein determining the plurality of target beams comprises at least one of the following:
detecting a downlink channel, and selecting the plurality of target beams based on detection results;
measuring a downlink signal, and selecting the plurality of target beams based on measurement results;
selecting the plurality of target beams from stored beams;
acquiring the plurality of target beams from a plurality of beams configured by the first node; or
selecting a target resource group from a plurality of resource groups configured, and selecting the plurality of target beams from a plurality of beams corresponding to the target resource group.

3. The method according to claim 1, wherein sending the random access signal to the first node based on the resources respectively corresponding to the plurality of target beams comprises:
determining a transmission power for sending the random access signal on the target beam;
determining a first beam from the plurality of target beams based on the transmission power,
wherein there is one or more first beams, and the number of the first beams is less than or equal to the number of the target beams; and
sending the random access signal on a resource corresponding to the first beam.

4. The method according to claim 3, wherein determining the first beam from the plurality of target beams based on the transmission power comprises:
determining the corresponding target beam of which the transmission power is less than or equal to a first threshold as the first beam.

5. The method according to claim 1, wherein after sending the random access signal to the first node based on the resources respectively corresponding to the plurality of target beams, the method further comprises:
acquiring a first response message sent by the first node; and
sending an uplink message to the first node based on an uplink channel resource configured by uplink channel configuration information in the first response message, wherein the uplink message comprises at least one of the following information:
first indication information; or
identification information of a second node sending the uplink message, wherein
the first indication information is configured to indicate whether to use a first effective beam, the first effective beam is a target beam for a random access signal corresponding to the first response message, and a beam corresponding to the first response message is a second effective beam.

6. The method according to claim 5, wherein after sending the uplink message to the first node, the method further comprises:
terminating sending of a second response message to the second node on a resource corresponding to the second effective beam when the first node determine that the second node no longer uses the first effective beam based on the first indication information in the received uplink message; and
sending the second response message to the second node on the resource corresponding to the second effective beam when the first node determines that the second node uses the first effective beam based on the first indication information in the received uplink message, wherein the second response message is a response message of the uplink message.

7. The method according to claim 5, wherein after sending the uplink message to the first node, the method further comprises:
the first node receiving the uplink message; and
when the first indication information comprised in at least one uplink message received by the first node within a time window indicates that the first effective beam is no longer used, the first node selecting at least one first effective beam among the first effective beams no longer in use and indicated by the second node, and continuously sending the second response message to the second node on a resource corresponding to the second effective beam corresponding to the at least one first effective beam selected, wherein the second response message is a response message of the uplink message.

8. The method according to claim 7, wherein after sending the uplink message to the first node, the method further comprises at least one of the following:
confirming the abandonment of the use of the first effective beam when indicating that a target downlink channel sent to the second node by the first node is not received on the resource corresponding to the second effective beam corresponding to the first effective beam not in use;
confirming not to continue detecting the target downlink channel on the resource corresponding to the second effective beam corresponding to the first effective beam when indicating that the target downlink channel sent to the second node by the first node is received on the resource corresponding to the second effective beam corresponding to the first effective beam not in use and control information in the target downlink channel comprises confirmation information not using the first effective beam;
continuously detecting the second response message according to scheduling information of the second response message in the target downlink channel when indicating that the target downlink channel sent by the first node is received on the resource corresponding to the second effective beam corresponding to the first effective beam not in use and the control information in the target downlink channel comprises information using the first effective beam; or
continuously detecting the second response message according to the scheduling information when indicating that the target downlink channel sent by the first node is received on the resource corresponding to the second effective beam corresponding to the first effective beam not in use, the control information in the target downlink channel comprises the scheduling information of the second response message, and the scheduling information is in a valid state.

9. The method according to claim 5, wherein sending the uplink message to the first node based on the uplink channel resource configured by the uplink channel configuration information in the first response message comprises:
selecting one or more first response messages from the acquired first response messages; and sending the uplink message to the first node through the uplink channel resource configured by the uplink channel configuration information in the selected first response message.

10. The method according to claim 5, wherein sending the uplink message to the first node comprises:
determining the uplink message that does not need to be sent on a resource corresponding to the first effective beam when at least one of the following rules is met:
sending the uplink message with a transmission power exceeding a second threshold on the resource corresponding to the first effective beam;
the size of the configured resource of the uplink message not meeting a first requirement;
the channel quality performance of the received first response message not meeting a second requirement; or
sending uplink messages other than the uplink message that does not need to be sent to the first node.

11. The method according to claim 5 or 10, wherein after sending the uplink message to the first node, the method further comprises:
receiving a target downlink channel sent by the first node, and determining whether to continuously use the first effective beam based on the target downlink channel, wherein the second response message is no longer detected when the target downlink channel indicates that the first effective beam is no longer used; the second response message is continuously detected when the target downlink channel indicates that the first effective beam needs to be continuously used; and
the second response message is a response message of the uplink message.

12. The method according to claim 5, wherein
acquiring the first response message returned by the first node based on the received random access signal comprises: detecting a target downlink channel sent by the first node within a target time window after sending the random access signal, wherein target control information of the target downlink channel carries scheduling information of the first response message; and detecting and receiving the first response message based on the scheduling information of the first response message; and
after acquiring the first response message returned by the first node based on the received random access signal, the method further comprises: terminating continuous detection of the target downlink channel within the target time window.

13. A signal receiving method, comprising:
receiving a random access signal sent by a second node on resources respectively corresponding to a plurality of target beams, wherein
the plurality of target beams are beams that are determined by the second node.

14. The method according to claim 13, wherein the plurality of target beams are determined by the second node through at least one of the following manners:
measuring a downlink signal, and selecting the plurality of target beams based on measurement results;
selecting the plurality of target beams from stored beams;
acquiring the plurality of target beams from a plurality of beams configured by the first node; or
selecting a target resource group from a plurality of resource groups configured, and selecting the plurality of target beams from a plurality of beams corresponding to the target resource group.

15. The method according to claim 13, wherein receiving the random access signal sent by the second node on resources respectively corresponding to the plurality of target beams comprises:
receiving the random access signal sent by the second node on a resource corresponding to a first beam, wherein the first beam is determined by the second node through the following manners:
determining a transmission power for sending the random access signal on the target beam; and
determining the first beam from the plurality of target beams based on the transmission power,
wherein there is one or more first beams, and the number of the first beams is less than or equal to the number of the target beams.

16. The method according to claim 15, wherein the second node determines the first beam from the plurality of target beams based on the transmission power by the following manner:
determining the corresponding target beam of which the transmission power is less than or equal to a first threshold as the first beam.

17. The method according to claim 13, wherein after receiving the random access signal sent by the second node on resources respectively corresponding to the plurality of target beams, the method further comprises:
returning a first response message to the second node based on the received random access signal, wherein the first response message is configured to instruct the second node to return an uplink message based on an uplink channel resource configured by uplink channel configuration information in the first response message, and the uplink message comprises at least one of the following information:
first indication information; or
identification information of a second node sending the uplink message, wherein
the first indication information is configured to indicate whether to use a first effective beam, the first effective beam is a target beam for a random access signal corresponding to the first response message, and a beam corresponding to the first response message is a second effective beam.

18. The method according to claim 17, further comprising:
terminating sending of a second response message to the second node on a resource corresponding to the second effective beam when determining that the second node no longer uses the first effective beam based on the first indication information in the received uplink message; and
sending the second response message to the second node on the resource corresponding to the second effective beam when determining that the second node uses the first effective beam based on the first indication information in the received uplink message, wherein
the second response message is a response message of the uplink message.

19. The method according to claim 17, further comprising:
receiving the uplink message; and
when the first indication information comprised in at least one uplink message received within a time window indicates that the first effective beam is no longer used, selecting at least one first effective beam among the first effective beams no longer in use and indicated by the second node, and continuously sending the second response message to the second node on a resource corresponding to the second effective beam corresponding to the at least one first effective beam selected, wherein the second response message is a response message of the uplink message.

20. The method according to claim 17, further comprising:
receiving the uplink message sent by the second node through the uplink channel resource configured by the uplink channel configuration information in one or more first response messages selected, wherein the one or more first response messages selected are selected by the second node from the acquired first response messages.

21. The method according to claim 17, further comprising:
sending a target downlink channel to the second node to indicate whether the second node continuously uses the first effective beam, wherein when it indicates that the second node no longer uses the first effective beam, the second node does not continue to detect a second response message; when it indicates that the second node needs to continuously use the first effective beam, the second node continuously detects the second response message; and
the second response message is a response message of the uplink message.

22. A signal sending apparatus, comprising:
a first determination module, configured to determine a plurality of target beams; and
a first sending module, configured to send a random access signal to a first node based on resources respectively corresponding to the plurality of target beams.

23. A signal receiving apparatus, comprising:
a third receiving module, configured to receive a random access signal sent by a second node on resources respectively corresponding to a plurality of target beams, wherein
the plurality of target beams are beams that are determined by the second node.

24. A computer-readable storage medium, having a computer program stored therein, wherein the computer program is configured to, when being executed by a processor, cause the processor to implement steps of the method according to any one of claims 1 to 12 or claims 13 to 21.

25. An electronic apparatus, comprising a memory, a processor, and a computer program that is stored in the memory and executable on the processor, wherein the processor is configured to, execute the computer program to implement steps of the method according to any one of claims 1 to 12 or claims 13 to 21.
